# EUROPEAN PATENT SPECIFICATION

(11) **EP 2 605 601 B1**
(45) Date of publication and mention of the grant of the patent: **06.11.2019**
(21) Application number: 12182893.3
(22) Date of filing: 04.09.2012
(51) Int. Cl.: H04W 52/02, H04W 60/00, H04W 8/04, H04W 60/04, H04W 88/06, H04W 92/02

(54) **Method for triggering joint registration performed by LTE single-card dual-standby multi-mode terminal, and terminal**
Verfahren zur Auslösung einer gemeinsamen Registrierung mit Ausführung durch ein LTE-Einzelkarten-Doppel-Standby-Mehrfachmodus-Endgerät, und Endgerät
Procédé de déclenchement de l'enregistrement effectué par terminal multimode à double veille à carte simple LTE et terminal

(30) Priority: 13.12.2011 CN 201110415114
(43) Date of publication of application: 19.06.2013
(73) Proprietor: Huawei Device Co., Ltd., Dongguan, Guangdong 523808 (CN)
(72) Inventor: ZHANG, Xiaopeng, 518129 Shenzhen (CN)
(74) Representative: Thun, Clemens

(56) References cited:
- EP-A1- 2 291 014
- WO-A1-2007/114648
- WO-A1-2009/043919
- 3GPP: "3rd Generation Partnership Project; Technical Specification Group Services and System Aspects; Circuit Switched (CS) fallback in Evolved Packet System (EPS); Stage 2 (Release 10)", 3GPP DRAFT; 23272-A60_CRS_IMPLEMENTED, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 1 December 2011 (2011-12-01), XP050575107, [retrieved on 2011-12-01]
- 3GPP: "3rd Generation Partnership Project; Technical Specification Group Services and System Aspects; General Packet Radio Service (GPRS) enhancements for Evolved Universal Terrestrial Radio Access Network (E-UTRAN) access (Release 11)", 3GPP DRAFT; 23401-B00_FROM_A60_CRS_IMPLEMENTED_NOT_CR2 204R2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, 1 December 2011 (2011-12-01), XP050575113, [retrieved on 2011-12-01]
- NTT DOCOMO ET AL: "Solution Guideline for Registration in Densely-populated area (RED)", 20070827; 20070827 - 20070831 , vol. S2-073526, no. 59 27 August 2007 (2007-08-27), pages 1-4, XP002500754, Retrieved from the Internet: URL:http://www.3gpp.org/ftp/TSG_SA/WG2_Arc h/TSGS2_59_Helsinki/Docs [retrieved on 2008-10-17]
- NTT DOCOMO ET AL: "A way forward for registration in densely-populated area", 20070827; 20070827 - 20070831 , vol. S2-073525, no. 59 27 August 2007 (2007-08-27), pages 1-4, XP002500753, Retrieved from the Internet: URL:http://www.3gpp.org/ftp/TSG_SA/WG2_Arc h/TSGS2_59_Helsinki/Docs/ [retrieved on 2008-10-17]

## Description

### FIELD OF THE INVENTION

The present invention relates to the field of communication technology, in particular, to a method for triggering joint registration performed by an LTE single-card dual-standby multi-mode terminal, and a terminal.

### BACKGROUND OF THE INVENTION

An LTE (Long Term Evolution, 3GPP long term evolution network) single-card dual-standby multi-mode terminal refers to a terminal camping on two communication subsystems at the same time, and the two communication subsystems are an LTE communication subsystem and a 2G/3G communication subsystem. A CS domain (Circuit Switch, circuit switch) of the terminal camps on a 2G/3G network and is used for a voice service; and a PS domain (Packet Switch, packet switch) camps on an LTE network and is used for a data service. A greatest advantage of the LTE single-card dual-standby multi-mode terminal lies in that, because it camps on the two communication systems at the same time, the quality of its voice service and the quality of its data service may be guaranteed at the same time, especially, the quality of its voice service is consistent with that of the 2G/3G terminal, and a problem of the LTE single-card single standby multi-mode terminal that communication quality is unstable when the voice service is used is effectively avoided. At present, there are already some operators, for example, the China Mobile, considering adopting this terminal solution when deploying the LTE network.

In the prior art, a registration process of the LTE single-card dual-standby multi-mode terminal is that: the terminal performs CS domain registration in the 2G/3G network and PS domain registration in the LTE network, and these two registration processes are independent of each other. A problem existing in the registration process is that: two network registration processes are required, the number of network signaling interactions is increased, which causes a waste of air interface resources, also causes increase of the power consumption of the terminal, and is to the disadvantage of maintaining the standby time of the terminal.

A 3GPP draft ("3rd Generation Partnership Project; Technical Specification Group Services and System Aspects; Circuit Switched (CS) fallback in Evolved Packet System (EPS); Stage 2 (Release 10)", December 1, 2011) discloses an attach procedure under the 3GPP standard in which a dual-mode UE attaches to both LTE and 2G/3G networks spontaneously, i.e., so-called CS fallback process. In this process, the MME allocates a LAI for the UE.

Another 3GPP draft ("3rd Generation Partnership Project; Technical Specification Group Services and System Aspects; General Packet Radio Service (GPRS) enhancements for Evolved Universal Terrestrial Radio Access Network (E-UTRAN) access (Release 11)", December 1, 2012) discloses attach procedures used for Emergency Attach by UEs that need to perform emergency services but not gain normal services from the network.

WO 2007/114648 relates to a method for supporting a communication service of an idle mode terminal located in a common routing area in a mobile communication system that includes a Node B, an Access Gateway (AGW), and a Home Subscriber Server (HSS), and has a Long Term Evolution (LTE) network and a 3rd Generation (3G) network connected to each other to perform transmission/reception. The AGW receives tracking area information of the LTE network, including routing area information of the 3G network, from the idle mode terminal via the Node B. The AGW sends common routing area indication information and identification information of the terminal to the HSS if the routing area information is coincident with the tracking area information. The HSS stores the common routing area indication information and the identification information of the terminal, and sends a response message according to the indication information.

WO 2009/043919 relates to a method for registering a mobile terminal with a cellular telecommunications network, the network having a plurality of location areas and a plurality of extended areas of coverage, each extended area being represented by a list of a subset of cells on one or more the location areas, and the mobile terminal using information about a given one of the location areas to connect to the network; the method comprising: transmitting a signal including a temporary identifier, which is unique to the mobile terminal when combined with the location area identifier that identifies the cell in which the temporary identifier was allocated; transmitting an indication of whether the mobile terminal supports location registration based on extended areas; and if extended area registration is supported, performing location registration based on the extended area.

A 3GPP draft (NTT DOCOMO ET AL: "Solution Guideline for Registration in Densely Populated area (RED)", August 27, 2007, XP002500754) discloses major aspects of Registration in Densely Populated area, such as Service aspect, Definition of new area, Functionality-mobility/location management and Information Storage.

A 3GPP draft (NTT DOCOMO ET AL: "A way forward for registration in densely-populated area", August 27, 2007, XP002500753) discloses a way forward for registration in densely-populated area. It discloses some methods as potential solution for UTRAN and GERAN, such as using current registration area (LA/RA), introducing new registration area and affected specifications.

EP 2 291 014 A1 relates to a method for association update. When a terminal performs location area update to a MSC/VLR via a GERAN/UTRAN, if it has performed combined update or CSFB attachment in an EPS network, then it sets a combined update indication which indicates the EPS network requires combined update. When the terminal moves to a registered tracking area of the EPS network, it determines whether the combined update indication has been set or not, if yes, it initiates combined TAU and LAU to an MME. After receiving a location update request from the MME, the MSC/VLR updates stored association information and re-establishes SGs association with the MME.

In addition, a joint registration method of a single-card single standby multi-mode terminal also exists in the prior art, that is, a voice function of the LTE network is implemented through a CS fallback (CS Fallback, CSFB) solution provided in a 3GPP protocol (TS 23.272). In order to support the CSFB, the single-card single standby multi-mode terminal uses the joint registration method during the network registration, that is, the registration is performed at the same time in CS domains of the LTE network and the 2G/3G network through wireless signaling of the LTE network. A problem existing in the joint registration method of the single-card single standby multi-mode terminal is that a 2G/3G network in which registration is performed is determined by the LTE network, and the network determined by the LTE may not be the best network, which is to the disadvantage of subscriber experience.

### SUMMARY OF THE INVENTION

Embodiments of the present invention provide a method for triggering joint registration performed by an LTE single-card dual-standby multi-mode terminal, and an LTE single-card dual-standby multi-mode terminal.

The method for triggering joint registration performed by an LTE single-card dual-standby multi-mode terminal is as follows:
determining, by a terminal, a location area identity of a 2G/3G network in which registration is to be performed; detecting, by the terminal, a remaining electric quantity of its battery; and sending, by the terminal, an attach request message to a mobile management entity of an LTE network, if the remaining electric quantity is greater than an electric quantity threshold, where the attach request message contains the location area identity and the electric quantity threshold is predetermined by the terminal, so as to trigger joint registration which is in the LTE network and the 2G/3G network and is performed together by the terminal and the mobile management entity of the LTE network.

The LTE single-card dual-standby multi-mode terminal includes:
a registration network determining unit, configured to determine a location area identity of a 2G/3G network in which registration is performed;
a remaining electric quantity detecting unit, configured to detect a remaining electric quantity of the terminal;
an electric quantity comparing unit, configured to compare the remaining electric quantity with an electric quantity threshold, and if the remaining electric quantity is greater than the electric quantity threshold, send an execution instruction to an attach request message sending unit, so as to trigger sending of the attach request message by the attach request message sending unit to the mobile management entity of the LTE network; and
the attach request message sending unit, configured to send an attach request message to a mobile management entity of an LTE network, where the attach request message contains the location area identity and the electric quantity threshold in the electric quantity comparing unit is predetermined by the terminal.

Through the foregoing technical solutions provided by the embodiments of the present invention, the joint registration in the 2G/3G network and the LTE network may be implemented through one network registration process, the number of network signaling interactions is reduced, and the power consumption of the terminal is saved, which is to the benefit of prolonging the standby time of the terminal and improving subscriber experience. Meanwhile, in the joint registration, the 2G/3G network in which registration is performed is decided by the terminal side, which improves a subscriber's autonomy and further improves the subscriber experience.

The invention is defined by the method and the apparatus of the independent claims.

In the following, parts of the description and drawings referring to embodiments which are not covered by the claims are not presented as embodiments of the invention, but as examples useful for understanding the invention.

### BRIEF DESCRIPTION OF THE DRAWINGS

To illustrate technical solutions in embodiments of the present invention more clearly, accompanying drawings to be used in the description of the embodiments are introduced briefly in the following. Apparently, the accompanying drawings in the following description are only some embodiments of the present invention, and persons of ordinary skill in the art can derive other drawings from these accompanying drawings without creative efforts.
- FIG. 1: is a flowchart of Embodiment 1 of the present invention;
- FIG. 2: is a flowchart of Embodiment 2 of the present invention;
- FIG. 3: is a structural diagram of Embodiment 3 of the present invention.
- FIG. 4: is a structural diagram of Embodiment 3 of the present invention.

### DETAILED DESCRIPTION OF THE EMBODIMENTS

To make purposes, technical solutions and advantages of the present invention clearer, specific embodiments of the present invention will be further described below in detail with reference to the accompanying drawings.

### Embodiment 1

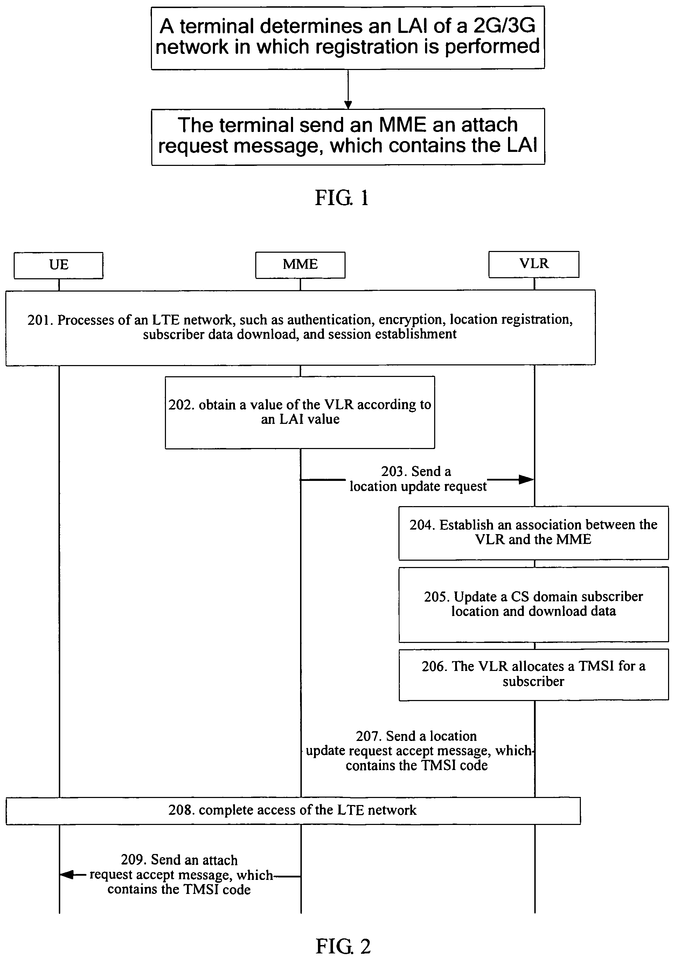

Embodiment 1 of the present invention provides a method for triggering joint registration which is in a 2G/3G network and an LTE network and is performed by an LTE single-card dual-standby multi-mode terminal. FIG. 1 is a flowchart of Embodiment 1 of the present invention, and the method in Embodiment 1 of the present invention is illustrated below in detail with reference to FIG. 1.

Step 101: After a terminal device starts up, start a 2G/3G radio frequency system and a LTE radio frequency system, and begin to search for a network. The terminal determines a 2G/3G network in which registration is to be performed and its location area identity (Location Area Identify, LAI) by comparing a determined available network list in a network searching result of a 2G/3G network with network selecting information of a public land mobile network (Public Land Mobile Network, PLMN) in a SIM card.

Step 102: The terminal sends an attach request message to a mobile management entity (Mobile Management Entity, MME) of an LTE network, where the attach request message contains the LAI of the 2G/3G network determined in step 1, so as to trigger joint registration which is in the LTE network and the 2G/3G. network and is performed together by the terminal and the mobile management entity. Optionally, the attach request message may further contain an access type, and the joint registration is designated to be performed in the access type. When the access type is not carried in the attach request message, it may be defaulted to perform the joint registration according to the protocol.

Optionally, the method for triggering the joint registration which is in the 2G/3G network and the LTE network and is performed by the LTE single-card dual-standby multi-mode terminal, may further include:
before the terminal sends the attach request message to the MME, determining, according to a remaining electric quantity of a battery of the terminal, whether to perform the jointregistration, which specifically is:
detecting the remaining electric quantity of the battery of the terminal;
sending, by the terminal, the attach request message to the MME, if the remaining electric quantity of the battery is greater than an electric quantity threshold.

In Embodiment 1 of the present invention, it may be implemented that the joint registration which is in the LTE network and the 2G/3G network and is performed by the LTE single-card dual-standby multi-mode terminal, is triggered, so as to reduce air interface signaling consumption caused by separate registration of the LTE single-card dual-standby multi-mode terminal in the 2G/3G network and in the LTE network. Meanwhile, by an optional solution in Embodiment 1 of the present invention, it may be implemented that a registration standby network of the LTE single-card dual-standby multi-mode terminal is determined according to the remaining electric quantity of the battery, which solves a problem in the prior art that a uniform registration policy is adopted without considering the electric quantity of the battery, so as to reduce the power consumption of the terminal, and prolong standby time of the terminal.

### Embodiment 2

Embodiment 2 of the present invention provides a method for performing joint registration of an LTE single-card dual-standby multi-mode terminal in a 2G/3G network and an LTE network according to the triggering method provided in Embodiment 1. FIG. 2 is a flowchart of Embodiment 2 of the present invention, and the method of Embodiment 2 of the present invention is illustrated below in detail with reference to FIG. 2.

After a terminal device sends a mobile management entity an attach request message which contains an LAI, the terminal device, the MME and a visitor location register (Visitor Location Register, VLR) of the a 2G/3G network together perform the joint registration in the LTE network and the 2G/3G network according to the attach request message. The joint registration specifically includes:
Step 201: The terminal and the MME perform, according to the attach request message, processes of the LTE network, such as certification, authentication, encryption, location registration, subscriber data download, and session establishment. The processes are implemented complying with the 3GPP protocol standard, and are not described in detail.
Step 202: According to an LAI value contained in the attach request message, the MME obtains a value of the visitor location register (VLR) according to an LAI-VLR comparison table, where the value of the visitor location register corresponds to the value of the LAI.
Step 203: The MME sends a location update request to the VLR according to the value of the VLR, where the location update request contains an LAI of a determined 2G/3G network, an international mobile subscriber identity (International Mobile Subscriber Identity, IMSI) of a subscriber, and a name of the MME.
Step 204: The VLR establishes an association between the VLR and the MME according to the location update request, and the establishing the association between the VLR and the MME is specifically: storing, by the VLR, the name of the MME, and mapping the name of the MME to data of the IMSI.
Step 205: The VLR executes a CS domain registration process of the terminal in the 2G/3G network according to the association, the registration process specifically includes updating a subscriber location and downloading subscriber data, where implementation processes of the updating the subscriber location and downloading the subscriber data are the same as those in the prior art, which are not described in detail.
Step 206: The VLR allocates a temperate mobile station identity (Temperate Mobile Station Identity, TMSI) to the terminal according to the downloaded subscriber data.
Step 207: The VLR sends a location update request accept message to the MME, and the location update request accept message contains the allocated TMSI code.
Step 208: The MME, the terminal and a base station eNodeB of the LTE network complete PS domain access of the LTE network, where the access process is implemented complying with the 3GPP protocol standard, and is not described in detail.
Step 209: The MME sends an attach request accept message to the terminal, where the attach request accept message contains the TMSI code that is allocated for the terminal by the VLR, and the terminal confirms, according to the TMSI code, that CS domain registration is successful.

In Embodiment 2 of the present invention, it may be implemented that the joint registration in the LTE network and the 2G/3G network is performed according to the LAI value that is determined by the terminal, so as to reduce air interface signaling consumption that is caused by the separate registration of the LTE single-card dual-standby multi-mode terminal in the 2G/3G network and in the LTE network, which is to the benefit of network roaming and subscriber selection.

### Embodiment 3

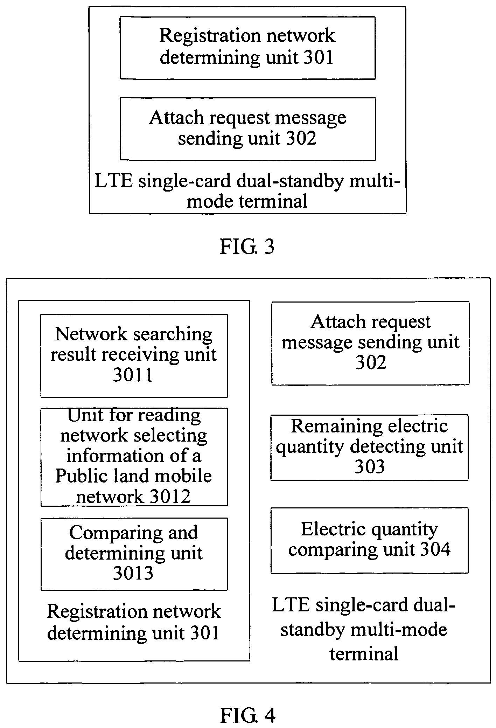

FIG. 3 is a structural diagram of Embodiment 3 of the present invention, and Embodiment 3 of the present invention provides an LTE single-card dual-standby multi-mode terminal capable of performing joint registration, including:
a registration network determining unit 301, configured to determine a 2G/3G network in which registration is to be performed and its location area identity (Location Area Identify, LAI) by comparing a determined available network list in a network searching result of a 2G/3G network with network selecting information of a public land mobile network (Public Land Mobile Network, PLMN) in a SIM card. As shown in FIG. 4, the registration network determining unit 301 specifically includes:
a network searching result receiving unit 3011, configured to receive a network searching result of a 2G/3G radio frequency system of the terminal;
a unit for reading network selecting information of a public land mobile network 3012, configured to read the network selecting information of the public land mobile network in the SIM card inserted into the terminal by a subscriber;
a comparing and determining unit 3013, configured to compare the network searching result received by the network searching result receiving unit with the network selecting information of the public land mobile network read by the public land mobile network selecting information reading unit, and determine the location area identity of the 2G/3G network in which registration is to be performed.
an attach request message sending unit 302, configured to send an attach request message to an MME, where the attach request message contains a determined LAI value. Optionally, the attach request message may further contain an access type, and the joint registration is designated to be performed in the access type. Optionally, as shown in FIG. 4, the LTE single-card dual-standby multi-mode terminal may further include:
   a remaining electric quantity detecting unit 303, configured to detect a current remaining electric quantity of the terminal; and
   an electric quantity comparing unit 304, configured to compare the remaining electric quantity with an electric quantity threshold. If the remaining electric quantity is greater than the electric
quantity threshold, an execution instruction is sent to the attach request message sending unit, to trigger sending of the attach request message by the attach request message sending unit to a mobile management entity of an LTE network.

It should be noted that persons of ordinary skill in the art should understand that all or part of the steps of the foregoing method embodiments may be completed by hardware, and may also be completed by a program instructing relevant hardware. The program may be stored in a computer readable storage medium, and the storage medium may be a read-only memory, a flash memory, a magnetic disk, an optical disk, a hard disk, or the like. When the program is run, the following steps is included:
determining, by a terminal, a location area identity of a 2G/3G network in which registration is to be performed; and
sending, by the terminal, an attach request message to a mobile management entity of an LTE network, where the attach request message contains the location area identity, so as to trigger the joint registration which is in the LTE network and the 2G/3G network and is performed together by the terminal and the mobile management entity of the LTE network.

## Claims

1. A method for triggering joint registration performed by an LTE single-card dual-standby multi-mode terminal, comprising:
determining (101), by a terminal, a location area identity of a 2G/3G network in which registration is to be performed;
detecting (102), by the terminal, a remaining electric quantity of its battery; and
sending (102), by the terminal, an attach request message to a mobile management entity of an LTE network, if the remaining electric quantity is greater than an electric quantity threshold, wherein the attach request message contains the location area identity and the electric quantity threshold is predetermined by the terminal, so as to trigger joint registration which is in the LTE network and the 2G/3G network and is performed together by the terminal and the mobile management entity of the LTE network.

2. The method for triggering joint registration performed by an LTE single-card dual-standby multi-mode terminal according to claim 1, wherein the determining (101), by the terminal, the location area identity of the 2G/3G network in which registration is to be performed is specifically:
by comparing a network searching result of a 2G/3G radio frequency system of the terminal with network selecting information of a public land mobile network in a SIM card, determining, by the terminal, the location area identity of the 2G/3G network in which registration is to be performed.

3. An LTE single-card dual-standby multi-mode terminal, comprising:
a registration network determining unit (301), configured to determine a location area identity of a 2G/3G network in which registration is performed;
a remaining electric quantity detecting unit (303), configured to detect a remaining electric quantity of the terminal;
an electric quantity comparing unit (304), configured to compare the remaining electric quantity with an electric quantity threshold, and if the remaining electric quantity is greater than the electric quantity threshold, send an execution instruction to an attach request message sending unit, so as to trigger sending of the attach request message by the attach request message sending unit to the mobile management entity of the LTE network; and
the attach request message sending unit (302), configured to send an attach request message to a mobile management entity of an LTE network, wherein the attach request message contains the location area identity and the electric quantity threshold in the electric quantity comparing unit is predetermined by the terminal.

4. The LTE single-card dual-standby multi-mode terminal according to claim 3, wherein the registration network determining unit comprises:
a network searching result receiving unit (3011), configured to receive a network searching result of a 2G/3G radio frequency system of the terminal;
a unit for reading network selecting information of a public land mobile network (3012), configured to read network selecting information of a public land mobile network in a SIM card inserted into the terminal by a subscriber; and
a comparing and determining unit (3013), configured to compare the network searching result received by the network searching result receiving unit with the network selecting information of the public land mobile network read by the public land mobile network selecting information reading unit, and determine the location area identity of the 2G/3G network in which registration is to be performed.

## Patentansprüche

1. Verfahren zum Auslösen einer gemeinsamen Registrierung, durchgeführt von einem LTE "Single-Card Dual-Standby Multi-mode"-Endgerät, das Folgendes umfasst:
Bestimmen (101), durch ein Endgerät, einer Standortbereichskennung eines 2G/3G-Netzwerks, in dem die Registrierung durchzuführen ist;
Erkennen (102), durch das Endgerät, einer Reststrommenge seiner Batterie; und
Senden (102), durch das Endgerät, einer Einbuchungsaufforderungsnachricht an eine "Mobility Management Entity" eines LTE-Netzwerks, falls die Reststrommenge größer als ein Strommengen-Schwellenwert ist, wobei die Einbuchungsaufforderungsnachricht die Standortbereichskennung enthält und der Strommengen-Schwellenwert durch das Endgerät vorbestimmt ist, um eine gemeinsame Registrierung auszulösen, die in dem LTE-Netzwerk und dem 2G/3G-Netzwerk stattfindet und zusammen durch das Endgerät und die "Mobility Management Entity" des LTE-Netzwerks durchgeführt wird.

2. Verfahren zum Auslösen einer gemeinsamen Registrierung, durchgeführt von einem LTE "Single-Card Dual-Standby Multi-mode"-Endgerät gemäß Anspruch 1, wobei das Bestimmen (101), durch das Endgerät, der Standortbereichskennung des 2G/3G-Netzwerks, in dem die Registrierung durchzuführen ist, speziell Folgendes beinhaltet:
durch Vergleichen eines Netzwerksuchergebnisses eines 2G/3G-Funkfrequenzsystems des Endgerätes mit der Netzwerkauswahlinformation eines öffentlichen terrestrischen Mobilfunknetzwerks in einer SIM-Karte, Bestimmen, durch das Endgerät, der Standortbereichskennung des 2G/3G-Netzwerks, in dem die Registrierung durchzuführen ist.

3. LTE "Single-Card Dual-Standby Multi-mode-Endgerät", das Folgendes umfasst:
eine Registrierungs-Netzwerkbestimmungseinheit (301), die dazu ausgelegt ist, eine Standortbereichskennung eines 2G/3G-Netzwerks zu bestimmen, in dem die Registrierung durchgeführt wird;
eine Reststrommengen-Erkennungseinheit (303), die dazu ausgelegt ist, eine Reststrommenge des Endgerätes zu erkennen;
eine Strommengen-Vergleichseinheit (304), die dazu ausgelegt ist, die Reststrommenge mit einem Strommengen-Schwellenwert zu vergleichen, und falls die Reststrommenge größer als der Strommengen-Schwellenwert ist, eine Ausführungsanweisung an eine Einbuchungsaufforderungsnachricht-Sendeeinheit zu senden, um das Senden der Einbuchungsaufforderungsnachricht durch die Einbuchungsaufforderungsnachricht-Sendeeinheit an die "Mobility Management Entity" des LTE-Netzwerks auszulösen; und
die Einbuchungsaufforderungsnachricht-Sendeeinheit (302), die dazu ausgelegt ist, eine Einbuchungsaufforderungsnachricht an eine "Mobility Management Entity" eines LTE-Netzwerks zu senden, wobei die Einbuchungsaufforderungsnachricht die Standortbereichskennung enthält und der Strommengen-Schwellenwert in der Strommengen-Vergleichseinheit durch das Endgerät vorbestimmt ist.

4. LTE "Single-Card Dual-Standby Multi-mode"-Endgerät gemäß Anspruch 3, wobei die Registrierungs-Netzwerkbestimmungseinheit Folgendes umfasst:
eine Netzwerk-Suchergebnis-Empfangseinheit (3011), die dazu ausgelegt ist, ein Netzwerk-Suchergebnis eines 2G/3G-Funkfrequenzsystems des Endgerätes zu empfangen;
eine Einheit zum Lesen von Netzwerkauswahlinformationen eines öffentlichen terrestrischen Mobilfunknetzwerks (3012), die dazu ausgelegt ist, Netzwerkauswahlinformationen eines öffentlichen terrestrischen Mobilfunknetzwerks in einer in das Endgerät eingesetzten SIM-Karte durch einen Teilnehmer zu lesen; und
eine Vergleichs- und Bestimmungseinheit (3013), die dazu ausgelegt ist, das von der Netzwerk-Suchergebnis-Empfangseinheit empfangene Netzwerk-Suchergebnis mit den von der Netzwerkauswahlinformationen-Leseeinheit des öffentlichen terrestrischen Mobilfunknetzwerks gelesenen Netzwerkauswahlinformationen des öffentlichen terrestrischen Mobilfunknetzwerks zu vergleichen, und die Standortbereichskennung des 2G/3G-Netzwerks, in dem die Registrierung durchzuführen ist, zu bestimmen.

## Revendications

1. Procédé pour déclencher un enregistrement conjoint réalisé par un terminal LTE multimodal monocarte à double attente, comprenant :
la détermination (101), par un terminal, d'une identité de zone de localisation d'un réseau 2G/3G dans lequel un enregistrement est destiné à être réalisé ;
la détection (102), par le terminal, d'une quantité électrique restante de sa batterie ; et l'envoi (102), par le terminal, d'un message de demande de rattachment à une entité de gestion mobile d'un réseau LTE, si la quantité électrique restante est supérieure à un seuil de quantité électrique,
dans lequel le message de demande de rattachement contient l'identité de zone de localisation et le seuil de quantité électrique est prédéterminé par le terminal, afin de déclencher un enregistrement conjoint qui est dans le réseau LTE et le réseau 2G/3G et est réalisé conjointement par le terminal et l'entité de gestion mobile du réseau LTE.

2. Procédé pour déclencher un enregistrement conjoint réalisé par un terminal LTE multimodal monocarte à double attente selon la revendication 1, dans lequel la détermination (101), par le terminal, de l'identité de zone de localisation du réseau 2G/3G dans lequel un enregistrement est destiné à être réalisé consiste spécifiquement en :
par la comparaison d'un résultat de recherche de réseau d'un système de radiofréquence 2G/3G du terminal à des informations de sélection de réseau d'un réseau mobile terrestre public dans une carte SIM, la détermination, par le terminal, de l'identité de zone de localisation du réseau 2G/3G dans lequel un enregistrement est destiné à être réalisé.

3. Terminal LTE multimodal monocarte à double attente, comprenant :
une unité de détermination de réseau d'enregistrement (301), configurée pour déterminer une identité de zone de localisation d'un réseau 2G/3G dans lequel un enregistrement est réalisé ;
une unité de détection de quantité électrique restante (303), configurée pour détecter une quantité électrique restante du terminal ;
une unité de comparaison de quantité électrique (304), configurée pour comparer la quantité électrique restante à un seuil de quantité électrique, et, si la quantité électrique restante est supérieure au seuil de quantité électrique, envoyer une instruction d'exécution à une unité d'envoi de message de demande de rattachement, afin de déclencher l'envoi du message de demande de rattachement par l'unité d'envoi de message de demande de rattachement à l'entité de gestion mobile du réseau LTE ; et
l'unité d'envoi de message de demande de rattachement (302), configurée pour envoyer un message de demande de rattachement à une entité de gestion mobile d'un réseau LTE, dans lequel le message de demande de rattachement contient l'identité de zone de localisation et le seuil de quantité électrique dans l'unité de comparaison de quantité électrique est prédéterminé par le terminal.

4. Terminal LTE multimodal monocarte à double attente selon la revendication 3, dans lequel l'unité de détermination de réseau d'enregistrement comprend :
une unité de réception de résultat de recherche de réseau (3011), configurée pour recevoir un résultat de recherche de réseau d'un système de radiofréquence 2G/3G du terminal ;
une unité pour lire des informations de sélection de réseau d'un réseau mobile terrestre public (3012), configurée pour lire des informations de sélection de réseau d'un réseau mobile terrestre public dans une carte SIM insérée dans le terminal par un abonné ; et
une unité de comparaison et de détermination (3013), configurée pour comparer le résultat de recherche de réseau reçu par l'unité de réception de résultat de recherche de réseau aux informations de sélection de réseau du réseau mobile terrestre public lues par l'unité de lecture d'informations de sélection de réseau mobile terrestre public, et déterminer l'identité de zone de localisation du réseau 2G/3G dans lequel un enregistrement est destiné à être réalisé.
